# EUROPEAN PATENT SPECIFICATION

(11) **EP 2 174 410 B1**
(45) Date of publication and mention of the grant of the patent: **21.02.2018**
(21) Application number: 08787690.0
(22) Date of filing: 30.07.2008
(51) Int. Cl.: H02P 3/02, H02M 5/40, H02M 5/45, H02M 5/458, H02P 3/14, H02P 21/00, H02P 23/06, H02P 3/22

(54) **CONTROL ARRANGEMENT OF AN ELECTRIC MOTOR**
STEUERUNGSANORDNUNG FÜR EINEN ELEKTROMOTOR
DISPOSITION DE COMMANDE D'UN MOTEUR ELECTRIQUE

(30) Priority: 02.08.2007 FI 20070583
(43) Date of publication of application: 14.04.2010
(73) Proprietor: Kone Corporation, 00330 Helsinki (FI)
(72) Inventor: STOLT, Lauri, FIN-00320 Helsinki (FI)
(74) Representative: K & H Bonapat Patentanwälte Koch · von Behren & Partner mbB
(86) International application number: PCT/FI2008/000091
(87) International publication number: WO 2009/016267

(56) References cited:
- EP-A2- 0 236 826
- EP-A2- 1 626 491
- GB-A- 2 107 538
- JP-A- 02 164 289
- JP-A- 2001 103 774
- JP-A- 2002 369 306
- KR-A- 20010 036 944
- US-A- 5 220 264
- US-A- 5 532 568
- US-A- 5 847 533
- US-A1- 2001 001 227
- US-B1- 6 369 538

## Description

### Field of the invention

The object of the invention is a control arrangement of an electric motor as defined in the preamble of claim 1, and a method for controlling an electric motor as defined in the preamble of claim 12.

### Prior art

In a transport system power is supplied to an electric motor for moving the transport appliance. Power supply to the motor generally occurs by means of a frequency converter. When braking the transport appliance, power also returns from the motor to the frequency converter, where it is generally converted into heat, especially in low-power systems, in a separate power resistor. In higher-powered systems the braking power of the motor is normally returned to the supply network by means of a network inverter rectifier. Especially in frequency converters in which the braking power of the motor is directed to a power resistor, the operation of brake choppers generally occurs in a higher voltage range than the intermediate circuit voltage rectified from the network voltage, in which case the intermediate circuit voltage increases during braking. Also in frequency converters in which the braking power is supplied to the network with a network inverter rectifier, the intermediate circuit voltage is normally higher than the rectified network voltage, owing to the operating principle of the network inverter rectifier.

Publications EP 0 637127 and EP 0 697 764 present e.g. a low-power frequency converter suited for pumping, air-conditioning or other similar use, which does not comprise motor braking. The frequency converter contains triacs on the network side, with which the network voltage is chopped to lower the intermediate circuit voltage according to the speed of the motor.

The speed-dependent regulation of the DC link voltage of high power inverter-fed induction machines drives, for example for traction purposes, by using controlled brake choppers, is the subject matter of JP2002369306 and EP0236826.

### Purpose of the invention

The purpose of this invention is to disclose a control arrangement of an electric motor, which has the purpose of eliminating the problems of prior art especially in relation to the losses of the controlled switches of the frequency converter and to the noise and vibration problems of the motor.

### Characteristic features of the invention

The control arrangement according to the invention is characterized by what is disclosed in the characterization part of claim 1. The method according to the invention is characterized by what is disclosed in the characterization part of 12. Other features of the invention are characterized by what is disclosed in the other claims. Some inventive embodiments are also discussed in the descriptive section of the present application. The inventive content of the application can also be defined differently than in the claims presented below. The inventive content may also consist of several separate inventions, especially if the invention is considered in the light of expressions or implicit sub-tasks or from the point of view of advantages or categories of advantages achieved. In this case, some of the attributes contained in the claims below may be superfluous from the point of view of separate inventive concepts.

In the control arrangement of an electric motor used with a frequency converter according to the invention the frequency converter is fitted between the power source and the electric motor. The frequency converter comprises a network rectifier that decreases and possibly also increases the voltage, a rectifier that transmits the braking power of the motor and an inverter comprising controlled changeover switches, as well as an intermediate circuit, which is fitted between the network rectifier, the rectifier that transmits the braking power of the motor and the inverter. The control arrangement according to the invention comprises a determination of the speed of the motor and the rectifier that transmits the braking power of the motor comprises a control of the braking power. The control of the braking power is fitted to regulate the intermediate circuit voltage according to the reference value. The aforementioned reference value of the intermediate circuit voltage is formed at least partly on the basis of the determined speed of the motor.

A frequency converter refers here to an appliance with which power is supplied between a power source, such as a network voltage supply, and an electric motor. The electric motor can be an AC motor, in which case variable frequency and variable amplitude voltage is supplied to the phases of the motor with a frequency converter. In this case the frequency converter comprises an inverter fitted between the intermediate circuit and the motor, the controlled changeover switches of which are switched to achieve the aforementioned AC voltage. The electric motor can also be a DC motor, in which case the frequency converter comprises instead of an inverter e.g. an H-bridge circuit, with which DC voltage is supplied to the windings of the motor. A network rectifier refers to an appliance with which the network voltage is converted into DC voltage to the DC intermediate circuit of the frequency converter. With the network rectifier according to the invention it is possible at least to decrease the voltage of the DC intermediate circuit in a controlled way, for which reason the network rectifier comprises a rectifier circuit that decreases the voltage. With one network rectifier according to the invention it is also possible to increase the voltage of the DC intermediate circuit, in which case this network rectifier also comprises a rectifier circuit that increases the voltage in addition to a rectifier circuit that decreases the voltage. The network rectifier can be of a structure, such as a rectifier bridge implemented with diodes, that suits it to supply control power only in one direction from the power source to the intermediate circuit of the frequency converter. The network rectifier can also be a controlled rectifier bridge implemented with serial connections of a diode and a controlled switch, such as a thyristor. The network rectifier can also be of a structure, such as a network inverter rectifier controlled by the whole bridge, suited to supply power in both directions between the power source and the intermediate circuit. The speed of the motor can be determined e.g. by measuring and estimating. Measurement of the speed of the motor refers e.g. to a pulse encoder or tachometer fitted to the shaft of the motor or via friction to the rim of the rotor of the motor or of the traction sheave. Estimation of the speed of the motor refers to estimating the speed of the rotor e.g. by means of the currents and voltages of the motor, or if a synchronous motor is in question, the speed of the motor can be estimated e.g. from the frequency of the supply voltage or of the supply voltage reference of the motor. Control of the braking power refers generally to those algorithms and control devices that are needed to control the braking power by switching the controlled switches of the rectifier that transmits braking power. Intermediate circuit voltage refers to the voltage difference between the positive and the negative busbar of the frequency converter. The reference value of intermediate circuit voltage in the invention is formed at least partly on the basis of the measured or estimated speed of the motor, in which case the reference value of intermediate circuit voltage can be small when the speed of the motor is small, and the reference value of intermediate circuit voltage can increase as the speed of the motor increases.

In one control arrangement according to the invention the frequency converter comprises a network rectifier control, which network rectifier control is fitted to regulate the intermediate circuit voltage according to the reference value, which aforementioned reference value of the intermediate circuit voltage is formed at least partly on the basis of the measured or estimated speed of the motor. Control of the network rectifier refers generally to those algorithms and control devices that are needed to control the power by switching the controlled switches of the network rectifier.

In one control arrangement according to the invention an inverter is fitted between the intermediate circuit and the electric motor and the frequency converter comprises determination of the direction of the flow of power through the inverter. The frequency converter is in this case fitted to control the intermediate circuit voltage with the network rectifier control when the power flow occurs from the intermediate circuit to the electric motor as well as with the control of the braking power when the power flow occurs from the electric motor to the intermediate circuit. The direction of the flow of power through the inverter can be estimated e.g. on the basis of the currents and voltages of the inverter. Since the power flows from the intermediate circuit of the frequency converter to the electric motor via the inverter, the direction of the flow of power can be determined also by means of measurements of the intermediate circuit voltage and of the intermediate circuit current. In the situation where the direction of the power flow changes such that power starts to return from the motor to the intermediate circuit of the inverter, the intermediate circuit voltage starts to rise if the power is not directed onwards from the intermediate circuit by means of the rectifier that transmits the braking power. In this case the changing of the direction of the power flow can in other words be detected also on the basis of the increase in intermediate circuit voltage. The direction of the power flow in the inverter can, of course, also be estimated by means of estimates of the currents and voltages of the inverter.

One frequency converter according to the invention comprises a network rectifier, a rectifier that transmits the braking power of the motor and determinations of the dissipated power of the inverter. In this case the frequency converter is fitted to control the intermediate circuit voltage either with a network rectifier control or alternatively with a control of the braking power such that each control used is fitted to regulate the intermediate circuit voltage according to a reference value, which aforementioned reference value of the intermediate circuit voltage is formed at least partly on the basis of a comparison of the dissipated power of the network rectifier, of the rectifier that transmits the braking power of the motor and also of the inverter. Both the inverter, the network rectifier and also the rectifier that transmits the braking power of the motor comprise all the switches of which the power dissipation can be estimated e.g. by measuring the current traveling through the switches as well as by estimating the switching frequency of the controlled switches. Temperature sensors can also be fitted in connection with the switch elements of the rectifiers, by means of which the power dissipation of the rectifiers can be estimated. The magnitude of the intermediate circuit voltage affects the power dissipation of the rectifiers, e.g. such that as the intermediate circuit voltage decreases the switching losses of the inverter diminish because, on the one hand, switching between the conducting and non-conducting state of a switch speeds up and the power losses connected to this state switching decrease, and, on the other hand, as the intermediate circuit voltage decreases the switching frequency variation of the motor current, and the noise and vibration problems resulting from this, diminish, in which case the switching frequency can be reduced. On the other hand the losses of the network rectifier that decreases the intermediate circuit voltage grow because as the intermediate circuit voltage decreases the intermediate circuit current traveling through the network rectifier grows. The reference value of the intermediate circuit voltage can also be formed by comparing the power dissipation of the rectifiers e.g. such that as the power dissipation of the inverter grows larger than the power dissipation of the network rectifier the reference value of the intermediate circuit voltage is reduced, and conversely as the power dissipation of the network rectifier grows larger than the power dissipation of the inverter the reference value of the intermediate circuit voltage is increased.

In one control arrangement according to the invention the frequency converter comprises a control of the inverter for controlling the motor with the variable frequency and variable amplitude output voltage of the inverter, which output voltage is formed by switching the changeover switches of the inverter with the switching reference formed by means of pulse width modulation. Control of the inverter is understood generally here to be those algorithms and devices that are needed to control the power supply of the inverter. The control of the inverter also comprises pulse width modulation, in which control signals that correspond to the supply voltages of the motor are converted into switching references of variable pulse width for the changeover switches of the inverter. Changeover switches refer to pairs of switches connected in series between the positive and the negative intermediate circuit busbar, by means of which the phases of the motor can be connected for a short interval to the voltage potential of the positive or the negative intermediate circuit busbar.

In one control arrangement according to the invention the network rectifier that decreases voltage comprises a controlled rectifier bridge. By means of the controlled rectifier bridge power supply is only possible from the power source towards the intermediate circuit of the inverter.

In one control arrangement according to the invention the network rectifier that increases and decreases voltage comprises a network inverter rectifier, which network inverter rectifier comprises a rectifier bridge as well as in addition a network filter connected in series between a power source and the input of the rectifier bridge. The network rectifier that increases and decreases voltage comprises a chopper the decreases voltage fitted to the DC output of the rectifier bridge. In this embodiment of the invention the intermediate circuit voltage is first raised in the DC voltage output of the network inverter rectifier to a pre-defined level higher than the uncontrolled rectified network voltage, and after this the output voltage of the network inverter rectifier is decreased with a chopper that decreases the voltage to the input voltage of the inverter.

In one control arrangement according to the invention the rectifier that transmits the braking power of the motor comprises a diode fitted in parallel with the controlled switch of the aforementioned chopper that decreases the voltage as well as a controlled switch connected in parallel with the diode of the chopper that decreases the voltage. In this case the rectifier that transmits braking power transfers the braking power from the intermediate circuit onwards to the output of the aforementioned network inverter rectifier. Since the intermediate circuit voltage is lower than the voltage of the voltage output of the rectifier bridge of the network inverter rectifier, the rectifier that transmits braking power also performs a matching of the voltage levels.

In one control arrangement according to the invention the rectifier that transmits the braking power of the motor comprises a controlled switch connected in series with a power resistor. In this embodiment of the invention the aforementioned serial circuit of the switch and the power resistor is connected in parallel to the intermediate circuit of the frequency converter. When the aforementioned controlled switch switches to a conducting state, the serial circuit of the switch and the resistor starts to conduct current from the positive intermediate circuit busbar to the negative, in which case the braking power starts to be converted into heat in the resistor.

In one control arrangement according to the invention the frequency converter comprises measurement of the intermediate circuit voltage. In this case the control of the braking power is fitted to read the measured intermediate circuit voltage and to compare the reference value of the intermediate circuit voltage to the measured intermediate circuit voltage, and after the measured intermediate circuit voltage has grown larger than the reference value to control the controllable switch of the rectifier that transmits braking power such that the relative conducting interval of the switch increases as the intermediate circuit voltage increases. The reference value of the intermediate circuit voltage can also comprise hysterisis limits, with which it is endeavored to prevent the control of the braking power from starting to connect the controlled switch of the rectifier that transmits braking power with a large frequency not defined in advance after the intermediate circuit voltage has exceeded the reference value. In this case the reference value of the intermediate circuit voltage can comprise two hysterisis limits, a first and a second hysterisis limit, of which the first hysterisis limit is higher than the second hysterisis limit. After the measured value of the intermediate circuit voltage has exceeded the first hysterisis limit, the rectifier that transmits braking power starts to control the braking power from the intermediate circuit, in which case the intermediate circuit starts to decrease. After the measured value of the intermediate circuit voltage has fallen below the second hysterisis limit, power control from the intermediate circuit with the rectifier that transmits braking power ceases.

In one control arrangement according to the invention the control of the braking power comprises a first reference value of the intermediate circuit voltage, and the control of the network rectifier comprises a second reference value of the intermediate circuit voltage. In this embodiment of the invention the first reference value of the intermediate circuit voltage is greater than the second reference value of the intermediate circuit voltage. In this case when the direction of the power flow is from the power source towards the motor, it is endeavored to control the intermediate circuit voltage with the network rectifier control according to the second reference value of the intermediate circuit voltage. When the motor starts to brake and the direction of the power flow changes from the motor to the intermediate circuit, the intermediate circuit voltage starts to increase. After the intermediate circuit voltage has exceeded a certain pre-defined limit value that is greater than the second reference value of intermediate circuit voltage, the network rectifier control can be interrupted and it is endeavored to control the intermediate circuit voltage with the control of the braking power according to the first reference value of intermediate circuit voltage.

In the method for controlling an electric motor used with a frequency converter according to the invention, the frequency converter is fitted between the power source and the electric motor. The frequency converter comprises a network rectifier that decreases and possibly increases the voltage, a rectifier that transmits the braking power of the motor and an inverter, as well as an intermediate circuit, which is fitted between the network rectifier, the rectifier that transmits the braking power of the motor and the inverter. In the method the speed of the motor is determined. In the method according to the invention a control of the braking power is made for the rectifier that transmits the braking power of the motor, a reference value of the intermediate circuit voltage is formed at least partly on the basis of the determined speed of the motor and the intermediate circuit voltage is regulated with the control of the braking power according to the aforementioned reference value of the intermediate circuit voltage.

In one method according to the invention for controlling an electric motor used with a frequency converter the intermediate circuit voltage is measured and the voltage measured is compared to the reference value of intermediate circuit voltage. When the measured value of the intermediate circuit voltage grows larger than the reference value, the controlled switch of the rectifier that transmits braking power is controlled such that the relative conducting interval of the switch grows as the intermediate circuit voltage grows.

In one embodiment of the invention an energy storage is connected in connection with the main circuit of the frequency converter via a power supply appliance such that the power supply appliance of the energy storage is fitted to supply power between the main circuit of the frequency converter, such as the intermediate circuit of the frequency converter, and the energy storage. In this case the power supply appliance of the energy storage is fitted to supply power from the energy storage via the main circuit of the frequency converter to the motor as well as to supply to the energy storage during motor braking the energy returning to the frequency converter from the main circuit of the frequency converter. In this embodiment of the invention the power supply appliance of the energy storage contains a rectifier that transmits the braking power of the motor, in which is a control of the braking power. The control of the braking power is in this case fitted to supply power from the main circuit of the frequency converter to the energy storage, while simultaneously regulating the intermediate circuit voltage according to the reference value, which reference value of intermediate circuit voltage is formed at least partly on the basis of the measured or estimated speed of the motor. The aforementioned energy storage can contain at least one supercapacitor and/or at least one accumulator, such as a lithium-ion accumulator.

In the arrangement or the method according to the invention the aforementioned electric motor can also be intended to move the transport appliance of a transport system. A transport appliance refers in this context to a part of a transport system, which is used to move passengers or goods. This kind of transport system can be, for instance, an elevator system, an escalator system, a travelator system or a crane system.

In the arrangement or the method according to the invention the aforementioned controlled switches can be, for instance, IGBT transistors, MOSFET transistors, bipolar transistors, thyristors or SCR (silicon controlled rectifier) switches.

### Advantages of the invention

With the invention at least one of the following advantages is achieved:
- When the intermediate circuit voltage of the frequency converter is reduced, the voltage variation between the poles of the controlled switches decreases, in which case the switching losses of the switches are reduced.
- When during motor braking the intermediate circuit voltage is controlled at least partly according to the measure or estimated speed of the motor, the switching variations of the switches during motor braking are reduced, especially compared to those prior art control arrangements in which the intermediate circuit voltage during operation of the brake choppers is always higher than the uncontrolled rectified intermediate circuit voltage.
- When the intermediate circuit voltage of the frequency converter is decreased, the switching frequency variation of the motor, the so-called current ripple, is reduced in which case the noise level of the motor decreases and vibration problems are reduced. In this case it is possible to achieve an adequate noise level and vibration level by dropping the switching frequency of the changeover switches, in which case the dissipated power of the inverter is further reduced.
- When the control voltage of the motor is made with an inverter by modulation, the accuracy of the modulation is comparable to the magnitude of the intermediate circuit voltage, and the accuracy improves as the intermediate circuit voltage decreases. Thus the accuracy of modulation improves when the intermediate circuit voltage decreases as the speed of the motor declines. Alternatively, a cheaper or more inaccurate modulator can then be used, in which case the costs of the system decrease.
- In transport systems in which high torque is needed with low motor speeds, the same changeover switches of the inverter can conduct large motor current uninterruptedly for a long period of time, in which case the heating up of the conducting changeover switches increases considerably. This kind of transport system is e.g. an elevator system, in which it is endeavored to keep in position or to level a fully loaded elevator car in the elevator shaft with the torque of the motor and the machinery brake opened. In this case when the intermediate circuit voltage drops to become small according to the speed of the motor, the switching losses of the inverter decrease, in which case the power dissipation and heating of the changeover switches substantially decrease.
- In the type of embodiment of the invention in which the frequency converter comprises a network rectifier that increases and decreases voltage, it is possible to control the intermediate circuit voltage from zero voltage to over the uncontrolled rectified intermediate circuit voltage. If the intermediate circuit voltage that has been rectified from three-phase network voltage by an uncontrolled diode bridge were, for instance, 550 volts, in this embodiment of the invention it would be possible to control the intermediate circuit voltage from zero right up to 800 volts, according to the speed of the motor. This increases the voltage margin in the control of the motor, in which case the motor can be used in a larger voltage range and e.g. at higher speeds than would be possible with uncontrolled rectified network voltage.
- With the network rectifier that decreases voltage according to the invention it is possible to charge the capacitors of the DC intermediate circuit of the frequency converter without a separate charging circuit that bypasses the cutoff of the main circuit. This improves the safety of the transport system because a separate charging circuit of the intermediate circuit capacitors would enable a flow of power to the motor that creates torque in a fault situation of the intermediate circuit.
- It is possible to disconnect the main circuit of the frequency converter by controlling the controlled switch of the network rectifier that decreases voltage to open. Since the main circuit can be disconnected also by controlling the changeover switches of the inverter open, the power supply of the motor of the transport system can be disconnected at two points that are independent of each other, which improves the reliability of the transport system e.g. in a fault situation.

### Presentation of drawings

In the following, the invention will be described in more detail by the aid of a few examples of its embodiments with reference to the attached drawings, wherein
- Fig. 1: presents a control arrangement of an electric motor according to the invention
- Fig. 2: presents a type of control arrangement according to the invention in which the frequency converter comprises a network rectifier that decreases and increases the voltage
- Fig. 3: presents the reference value of the intermediate circuit voltage presented by means of the speed of the elevator
- Fig. 4: presents the changeover switch of the inverter
- Fig. 5: presents the rectifier of the inverter
- Fig. 6: presents the switching reference of the controlled switch incorporated in the arrangement according to the invention.

In the embodiments described in the following one control arrangement of an electric motor used with a frequency converter according to the invention is fitted into an elevator system.

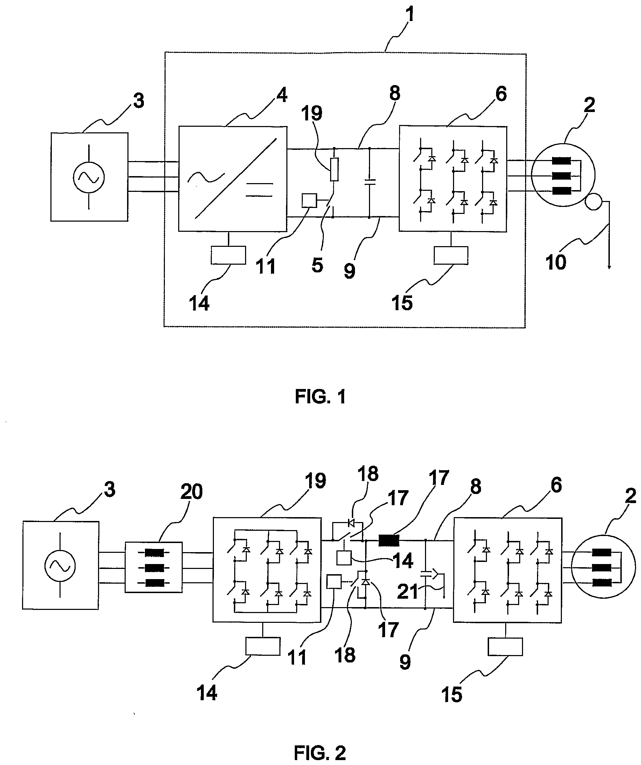

Fig. 1 presents one control arrangement of an elevator motor used with a frequency converter according to the invention. Power is supplied between the power source 3, which is here a network voltage supply, and the elevator motor 2 with a frequency converter 1. The three-phase network voltage 3 is rectified with a network rectifier 4 to the intermediate circuit 8, 9 of the frequency converter. The inverter 6 supplies power between the intermediate circuit and the electric motor 2. When the direction of the power supply is from the intermediate circuit 8, 9 to the motor 2, the network rectifier 4 sets the intermediate circuit voltage 21 according to the reference value 12 of the intermediate circuit voltage with the network rectifier control 14. When the direction of the power supply is from the motor 2 to the intermediate circuit 8, 9, the rectifier 5 that transmits the braking power of the motor sets the reference value of the intermediate circuit voltage with the control 11 of braking power. The rectifier that transmits braking power here comprises a controlled switch 5, which is fitted in series with a power resistor 19. The serial circuit of the controlled switch 5 and the power resistor 19 is connected in parallel with the positive intermediate circuit busbar 8 and the negative intermediate circuit busbar 9 of the intermediate circuit. When the switch 5 conducts, current travels through the serial circuit of the resistor and the switch, in which case the intermediate circuit power is converted into heat in the power resistor 19. In this arrangement a friction-operated tachometer is fitted to the rim of the motor 2, from the measuring signal 10 of which the speed of the motor is read. The reference value 12 is formed partly based on this measurement of the speed of the motor.

In the control arrangement presented in Fig. 2 the frequency converter 1 comprises a network rectifier that increases and decreases voltage. The aforementioned network rectifier comprises a network inverter rectifier, which comprises a network filter 20 as well as a rectifier bridge 19 comprising controlled changeover switches. The network filter 20 comprises at least chokes, which are connected in series between the input of the rectifier bridge and the phases of the network voltage. The network filter 20 also possibly comprises capacitors connected in parallel with the phases of the network voltage. The network filter 20 and the rectifier bridge 19 together form an network inverter rectifier, which supplies power in both directions between the DC voltage output of the rectifier bridge 19 and the network voltage (3). With the network inverter rectifier it is also possible to increase the voltage in the DC voltage output of the rectifier bridge 19 to a higher level than uncontrolled DC rectification, so that the network inverter rectifier also performs a voltage matching between the network voltage and the DC voltage output of the rectifier bridge 19. Uncontrolled rectification refers here to rectification of the network voltage with just an uncontrolled diode bridge.

A chopper 17 that decreases voltage, which comprises at least a controlled switch, a diode and a choke connected to the positive intermediate circuit busbar 8, is fitted to the DC voltage output of the rectifier bridge 19. The chopper that decreases voltage supplies power from the DC voltage output of the rectifier bridge 19 to the intermediate circuit 8, 9. The controlled switch is controlled with the network rectifier control 14 such that the intermediate circuit voltage 21 is set according to the reference value of intermediate circuit voltage. Since it is possible to increase the voltage in the DC voltage output of the rectifier bridge 19 higher than the uncontrolled rectified DC voltage, it is possible by means of the chopper that decreases voltage to set the intermediate circuit voltage 21 from zero voltage right up to the DC output voltage of the rectifier bridge 19, in which case the control voltage range of the motor is as wide as possible.

The rectifier 18 that transmits the braking power of the motor is fitted in connection with the chopper 17 that decreases voltage such that the diode of the rectifier 18 that transmits braking power is connected in parallel with the controlled switch of the chopper 17 that decreases the voltage and the controlled switch of the rectifier 18 that transmits braking power is connected in parallel with the diode of the chopper 17 that decreases the voltage. When the controlled switch of the rectifier 18 that transmits braking power is controlled with the control 11 of the braking power, the braking power is transferred from the intermediate circuit 8, 9 to the DC voltage output of the rectifier bridge 19 of the network inverter rectifier, and in this case the network inverter rectifier transmits the braking power onwards to the network supply 3. Since the intermediate circuit voltage 21 can be lower than the voltage in the DC voltage output of the rectifier bridge 19, the rectifier 18 that transmits braking power also performs a voltage matching.

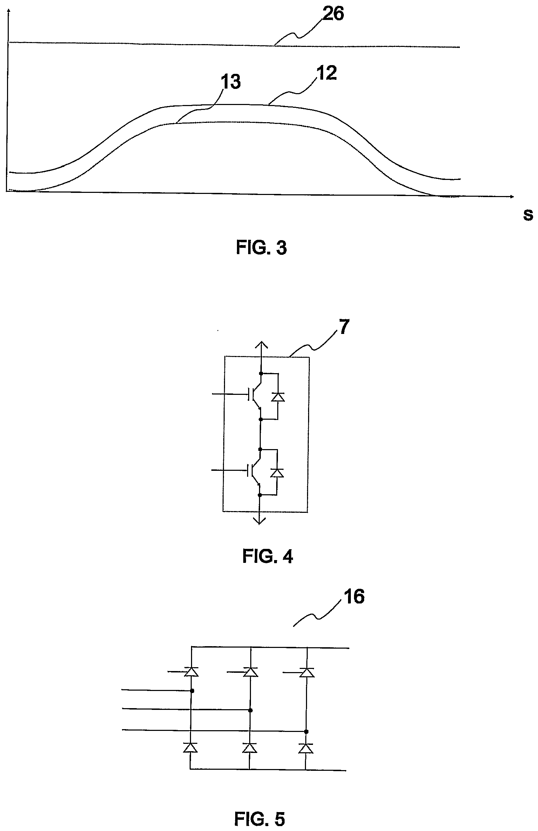

Fig. 3 presents the reference value 12 of the intermediate circuit voltage by means of the speed 13 of the elevator. The elevator car moves in the elevator shaft at the speed 13, in which case the position s of the elevator car in the elevator shaft changes. The frequency converter 1 measures the speed 13 of the elevator motor 2 and thus also of the elevator, and determines the reference value 12 of the intermediate circuit voltage on the basis of the speed of the elevator such that the reference value 12 of the intermediate circuit voltage increases as the speed 13 of the elevator increases. This is based on the fact that the output voltage of the elevator motor grows as the speed of the motor grows, in which case the necessary amplitude of the control voltage grows. The maximum value of the amplitude of the control voltage, on the other hand, is determined from the intermediate circuit voltage 21. In this embodiment of the invention the reference value 12 of the intermediate circuit voltage changes directly according to the speed 13 of the elevator such that at zero speed the value of the intermediate circuit voltage is a certain constant voltage. Since the amplitude of the control voltage of the motor is determined by the currents of the motor windings as well as by the source voltage, the reference value of the intermediate circuit voltage can be determined using the measurement of the amplitude and phase of the motor currents as well as of the speed of the elevator motor. In this case the reference value of intermediate circuit voltage is thus increased as the motor currents increase. The greatest possible value of intermediate circuit voltage is also marked in Fig. 3, which is determined on the basis of the voltage of the DC voltage output of the rectifier bridge 19 of the network rectifier.

Fig. 4 presents the structure of one changeover switch 7 according to the invention. Here the changeover switch comprises two controlled switches connected in series, which are IGBT transistors. The collector of the second transistor is connected to the positive intermediate circuit busbar 8 and the emitter of the second transistor is connected to the negative intermediate circuit busbar 9. The voltage between the serial circuit of switches can thus be connected either to the positive 8 or the negative 9 voltage potential of the intermediate circuit.

Fig. 5 presents a controlled rectifier bridge 16. The bridge circuit comprises serial connections of a diode and a thyristor connected in parallel in pairs between the positive 8 and the negative 9 intermediate circuit busbar. By means of the circuit it is possible to implement a network rectifier that decreases voltage. In this case by means of the network rectifier it is possible to supply power only from the network voltage supply 3 to the intermediate circuit 8, 9.

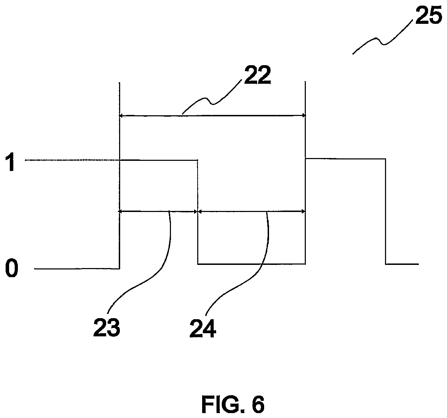

Fig. 6 presents a switching reference of a controlled switch 25 incorporated in the arrangement according to the invention. With the switching reference 1 the controlled switch switches into a conductive state, and with the switching reference 0 the switch switches off. For example the control 11 of the braking power of the rectifier 5, 18 that transmits braking power is fitted to increase the relative conducting interval 23 of the controlled switch as the intermediate circuit voltage 21 grows. As the relative conducting interval 23 grows the relative closed interval 24 of course shortens such that when the conducting interval 23 reaches the time of the switching interval 22 the closed interval 24 goes to zero.

Although the invention described above is suited especially to different transport systems, it is obvious to the person skilled in the art that the control arrangement of an electric motor used with a frequency converter according to the invention is also suited to many other such electric motor drives, in which power flows to the intermediate circuit of the frequency converter, and in which the flowing power is also directed onwards from the intermediate circuit to some power drain.

The invention is not limited solely to the embodiments described above, but instead many variations are possible within the scope of the inventive concept defined by the claims below.

## Claims

1. Control arrangement of an electric motor (2) used with a frequency converter (1), wherein the frequency converter is fitted between the power source (3) and the electric motor (2) and in which the frequency converter comprises a network rectifier (4) that decreases and also possibly increases the voltage, a rectifier (5, 18) that transmits the braking power of the motor and an inverter (6) comprising controlled switches (7), as well as an intermediate circuit (8, 9), which is fitted between the network rectifier (4) the rectifier that transmits the braking power of the motor and the inverter, and which control arrangement comprises a determination of the speed (13) of the motor, wherein the rectifier (5, 18) that transmits the braking power of the motor comprises a control (11) of the braking power, which control of the braking power is fitted to regulate the intermediate circuit voltage according to a reference value (12), which aforementioned reference value of the intermediate circuit voltage is formed at least partly on the basis of the determined speed (13) of the motor, **characterized in that** the frequency converter comprises a network rectifier control (14), which network rectifier control is fitted to regulate the intermediate circuit voltage according to a reference value (12), which aforementioned reference value of the intermediate circuit voltage is formed at least partly on the basis of the measured or estimated speed (13) of the motor, wherein the control (11) of the braking power comprises a first reference value of the intermediate circuit voltage, the control of the network rectifier comprises a second reference value of the intermediate circuit voltage, and **in that** the first reference value of the intermediate circuit voltage is greater than the second reference value of the intermediate circuit voltage.

2. Control arrangement according to claim 1, **characterized in that** the inverter (6) is fitted between the intermediate circuit (8, 9) and the electric motor (2), the frequency converter (1) comprises a determination of the direction of the power flow through the inverter, and **in that** the frequency converter is fitted to control the intermediate circuit voltage with the network rectifier control (14) when the power flow occurs from the intermediate circuit (8, 9) to the electric motor (2) as well as with the control (11) of the braking power when the power flow occurs from the electric motor (2) to the intermediate circuit (8, 9).

3. Control arrangement according to any of the preceding claims, **characterized in that** the frequency converter (1) comprises determinations of the dissipated power of the network rectifier (4), the rectifier (5, 18) that transmits the braking power of the motor and also of the inverter (6), and **in that** the frequency converter is fitted to control the intermediate circuit voltage either with a network rectifier control (14) or alternatively with a control (11) of the braking power, and **in that** each control used is fitted to regulate the intermediate circuit voltage according to a reference value (12), which aforementioned reference value of the intermediate circuit voltage is formed at least partly on the basis of a comparison of the dissipated power of the network rectifier (4), of the rectifier (5, 18) that transmits the braking power of the motor and also of the inverter (6).

4. Control arrangement according to any of the preceding claims, **characterized in that** the frequency converter (1) comprises a control (15) of the inverter for controlling the motor with variable frequency and variable amplitude output voltage, which output voltage is formed by switching the changeover switches (7) of the inverter by means of pulse width modulation with the switching reference (25) formed.

5. Control arrangement according to any of the preceding claims, **characterized in that** the network rectifier that decreases voltage comprises a controlled rectifier bridge (16).

6. Control arrangement according to any of the preceding claims, **characterized in that** the network rectifier that increases and decreases voltage comprises a network inverter rectifier, which network inverter rectifier comprises a rectifier bridge (19) as well as in addition a network filter (20) connected in series between a power source (3) and the input of the rectifier bridge, and which network rectifier that increases and decreases voltage comprises a chopper (17) that decrease voltage fitted to the DC voltage output of the rectifier bridge (19).

7. Control arrangement according to 6, **characterized in that** the rectifier (18) that transmits the braking power of the motor comprises a diode fitted in parallel with the controlled switch of the aforementioned chopper (17) that decreases the voltage as well as a controlled switch connected in parallel with the diode of the chopper that decreases the voltage.

8. Control arrangement according to claims 1 - 6, **characterized in that** the rectifier that transmits the braking power of the motor comprises a controlled switch (5) connected in series with the power resistor (19), and **in that** the aforementioned serial circuit of the switch and the power resistor is connected in parallel with the intermediate circuit (8, 9) of the frequency converter.

9. Control arrangement according to any of the preceding claims, **characterized in that** the frequency converter (1) comprises a measurement (21) of the intermediate circuit voltage, and **in that** the control (11) of the braking power is fitted to read the measured intermediate circuit voltage and to compare the reference value (12) of the intermediate circuit voltage to the measured intermediate circuit voltage (21), and after the measured intermediate circuit voltage grows larger than the reference value to control the controllable switch of the rectifier (5, 18) that transmits braking power such that the relative conducting interval (23) of the switch grows as the intermediate circuit voltage (23) grows.

10. Method for controlling an electric motor used with a frequency converter (1), wherein the frequency converter is fitted between the power source (3) and the electric motor (2) and in which the frequency converter comprises a network rectifier (4) that decreases and possibly also increases the voltage, a rectifier (5, 18) that transmits the braking power of the motor and an inverter (6), as well as an intermediate circuit (8, 9), which is between the network, the rectifier that transmits the braking power of the motor and the inverter, and in which method the speed (13) of the motor is determined, **characterized in that** the frequency converter comprises a network rectifier control (14), which network rectifier control is fitted to regulate the intermediate circuit voltage according to a reference value (12), which aforementioned reference value of the intermediate circuit voltage is formed at least partly on the basis of the measured or estimated speed (13) of the motor, and **in that**:
- a control (11) of braking power is made for the rectifier (5, 18) that transmits the braking power of the motor
- the reference value (12) of the intermediate circuit voltage is formed at least partly on the basis of the determined speed (13) of the motor (2), wherein the control (11) of the braking power comprises a first reference value of the intermediate circuit voltage, the network rectifier comprises a second reference value of the intermediate circuit voltage, and **in that** the first reference value of the intermediate circuit voltage is greater than the second reference value of the intermediate circuit voltage.
- the intermediate circuit voltage (21) is regulated with the control (11) of the braking power according to the aforementioned reference value (12) of intermediate circuit voltage.

11. Method according to 10, **characterized in that:**
- the intermediate circuit voltage (21) is measured
- the voltage measured is compared to the reference value (12) of intermediate circuit voltage
- when the measured value of the intermediate circuit voltage grows larger than the reference value, the controlled switch of the rectifier (5, 18) that transmits braking power is controlled such that the relative conducting interval (23) of the switch grows as the intermediate circuit voltage (21) grows.

12. Arrangement or method according to any of the claims above, **characterized in that** the electric motor (2) referred to is an elevator motor.

## Patentansprüche

1. Steuereinrichtung eines Elektromotors (2), der mit einem Frequenzumrichter (1) verwendet wird, wobei der Frequenzumrichter zwischen der Stromquelle (3) und dem Elektromotor (2) vorliegt, und bei der der Frequenzumrichter einen Netzgleichrichter (4) umfasst, der die Spannung vermindert und ebenso möglicherweise erhöht, ferner einen Gleichrichter (5, 18), der die Bremsleistung des Motors überträgt, sowie einen Wechselrichter (6) mit gesteuerten Schaltern (7), wie auch einen Zwischenkreis (8, 9), der zwischen dem Netzgleichrichter (4), dem die Bremsleistung des Motors übertragenden Gleichrichter und dem Wechselrichter vorliegt, und welche Steuereinrichtung eine Bestimmung der Geschwindigkeit (13) des Motors umfasst, wobei der Gleichrichter (5, 18), der die Bremsleistung des Motors überträgt, eine Steuerung (11) der Bremsleistung aufweist, welche Steuerung der Bremsleistung vorgesehen ist, um die Zwischenkreisspannung gemäß einem Referenzwert (12) einzuregeln, welcher erwähnte Referenzwert der Zwischenkreisspannung zumindest teilweise auf der Grundlage der bestimmten Geschwindigkeit (13) des Motors gebildet wird, **dadurch gekennzeichnet, dass** der Frequenzumrichter eine Netzgleichrichtersteuerung (14) aufweist, welche Netzgleichrichtersteuerung vorgesehen ist, um die Zwischenkreisspannung gemäß einem Referenzwert (12) zu regeln, welcher erwähnte Referenzwert der Zwischenkreisspannung zumindest teilweise auf Grundlage der gemessenen oder bestimmten Geschwindigkeit (13) des Motors gebildet ist, wobei die Steuerung (11) der Bremsleistung einen ersten Referenzwert der Zwischenkreisspannung aufweist, die Steuerung des Netzgleichrichters einen zweiten Referenzwert der Zwischenkreisspannung aufweist, und dass der erste Referenzwert der Zwischenkreisspannung größer ist als der zweite Referenzwert der Zwischenkreisspannung.

2. Steuereinrichtung gemäß Anspruch 1, **dadurch gekennzeichnet, dass** der Wechselrichter (6) zwischen dem Zwischenkreis (8, 9) und dem Elektromotor (2) vorliegt, wobei der Frequenzumrichter (1) eine Bestimmung der Richtung des Stromflusses durch den Wechselrichter umfasst, und dass der Frequenzumrichter vorgesehen ist, um die Zwischenkreisspannung mit der Netzgleichrichtersteuerung (14) zu steuern, wenn der Stromfluss von dem Zwischenkreis (8, 9) an den Elektromotor (2) auftritt, wie auch mit der Steuerung (11) der Bremsleistung, wenn der Stromfluss von dem Elektromotor (2) an den Zwischenkreis (8, 9) auftritt.

3. Steuereinrichtung gemäß einem der vorangehenden Ansprüche, **dadurch gekennzeichnet, dass** der Frequenzumrichter (1) Bestimmungen der Dissipationsenergie des Netzgleichrichters (4), des Gleichrichters (5, 18), der die Bremsleistung des Motors überträgt, und auch des Wechselrichters (6) umfasst, und dass der Frequenzumrichter vorgesehen ist, um die Zwischenkreisspannung entweder mit einer Netzgleichrichtersteuerung (14) oder alternativ mit einer Steuerung (11) der Bremsleistung zu steuern, und dass jede verwendete Steuerung vorgesehen ist, um die Zwischenkreisspannung gemäß einem Referenzwert (12) zu regeln, welcher erwähnte Referenzwert der Zwischenkreisspannung zumindest teilweise auf der Grundlage eines Vergleichs der Dissipationsenergie des Netzgleichrichters (4), des Gleichrichters (5, 18), der die Bremsleistung des Motors überträgt, und ebenso des Wechselrichters (6) gebildet wird.

4. Steuereinrichtung gemäß einem der vorangehenden Ansprüche, **dadurch gekennzeichnet, dass** der Frequenzumrichter (1) eine Steuerung (15) des Wechselrichters zum Steuern des Motors mit einer variablen Frequenz und einer variablen Ausgangsspannungsamplitude aufweist, welche Ausgangsspannung durch Schalten der Umschalter (7) des Wechselrichters mittels Pulsbreitenmodulation mit der Umschaltreferenz (25) gebildet ist.

5. Steuereinrichtung gemäß einem der vorangehenden Ansprüche, **dadurch gekennzeichnet, dass** der Netzgleichrichter, der die Spannung verringert, eine gesteuerte Gleichrichterbrücke (16) aufweist.

6. Steuereinrichtung gemäß einem der vorangehenden Ansprüche, **dadurch gekennzeichnet, dass** der Netzgleichrichter, der die Spannung erhöht und verringert, einen Netzwerk-Wechselrichter-Gleichrichter aufweist, der eine Gleichrichterbrücke (19) sowie zusätzlich einen Netzfilter (20) aufweist, der zwischen einer Stromquelle (3) und dem Eingang der Gleichrichterbrücke in Serie geschaltet ist, wobei der die Spannung erhöhende und verringernde Netzgleichrichter einen Zerhacker (17) aufweist, der die an dem Gleichspannungsausgang der Gleichrichterbrücke (19) anliegende Spannung verringert.

7. Steuereinrichtung gemäß Anspruch 6, **dadurch gekennzeichnet, dass** der die Bremsleistung des Motors übertragende Gleichrichter (18) eine Diode aufweist, die parallel mit dem gesteuerten Schalter des erwähnten Zerhackers (17) implementiert ist, der die Spannung vermindert, wie auch einen gesteuerten Schalter, der parallel zu der Diode des Zerhackers angeschlossen ist, der die Spannung verringert.

8. Steuereinrichtung gemäß der Ansprüche 1 - 6, **dadurch gekennzeichnet, dass** der die Bremsleistung des Motors übertragende Gleichrichter einen gesteuerten Schalter (5) aufweist, der mit dem Leistungswiderstand (19) in Serie geschaltet ist, und dass der erwähnte Serienkreis des Schalters und der Leistungswiderstand parallel zu dem Zwischenkreis (8, 9) des Frequenzumrichters angeschlossen sind.

9. Steuereinrichtung gemäß einem der vorangehenden Ansprüche, **dadurch gekennzeichnet, dass** der Frequenzumrichter (1) eine Messung (21) der Zwischenkreisspannung umfasst, und dass die Steuerung (11) der Bremsleistung vorgesehen ist, um die gemessene Zwischenkreisspannung zu lesen und den Referenzwert (12) der Zwischenkreisspannung mit der gemessenen Zwischenkreisspannung (21) zu vergleichen, wobei nach einem Anwachsen der gemessenen Zwischenkreisspannung über den Referenzwert wächst, der steuerbare Schalter des Gleichrichters (5, 18), der die Bremsleistung überträgt, so gesteuert wird, dass das relative Leitintervall (23) des Schalters mit dem Ansteigen der Zwischenkreisspannung (23) anwächst.

10. Verfahren zum Steuern eines mit einem Frequenzumrichter (1) verwendeten Elektromotors, wobei der Frequenzumrichter zwischen der Stromquelle (3) und dem Elektromotor (2) vorgesehen ist, und bei dem der Frequenzumrichter einen Netzgleichrichter (4) aufweist, der die Spannung verringert und ebenso möglicherweise erhöht, ferner einen Gleichrichter (5, 18), der die Bremsleistung des Motors überträgt, und einen Wechselrichter (6), wie auch einen Zwischenkreis (8, 9), der zwischen dem Netzwerk, dem die Bremsleistung übertragenden Gleichrichter des Motors und dem Wechselrichter vorliegt, wobei in dem Verfahren die Geschwindigkeit (13) des Motors bestimmt wird, **dadurch gekennzeichnet, dass** der Frequenzumrichter eine Netzgleichrichtersteuerung (14) aufweist, die vorgesehen ist, um die Zwischenkreisspannung gemäß einem Referenzwert (12) zu regeln, welcher erwähnte Referenzwert der Zwischenkreisspannung zumindest teilweise auf der Grundlage der gemessenen oder bestimmten Geschwindigkeit (13) des Motors gebildet wird, und dass:
- eine Steuerung (11) an Bremsleistung für den Gleichrichter (5, 18) gebildet wird, der die Bremsleistung des Motors überträgt
- der Referenzwert (12) der Zwischenkreisspannung zumindest teilweise auf der Grundlage der bestimmten Geschwindigkeit (13) des Motors (2) gebildet wird, wobei die Steuerung (11) der Bremsleistung einen ersten Referenzwert der Zwischenkreisspannung aufweist, der Netzgleichrichter einen zweiten Referenzwert der Zwischenkreisspannung aufweist, und dass der erste Referenzwert der Zwischenkreisspannung größer ist als der zweite Referenzwert der Zwischenkreisspannung.
- die Zwischenkreisspannung (21) mit der Steuerung (11) der Bremsleistung gemäß dem erwähnten Referenzwert (12) der Zwischenkreisspannung geregelt wird.

11. Verfahren gemäß Anspruch 10, **dadurch gekennzeichnet, dass**
- die Zwischenkreisspannung (21) gemessen wird
- die gemessene Spannung mit dem Referenzwert (12) der Zwischenkreisspannung verglichen wird
- wenn der gemessene Wert der Zwischenkreisspannung über den Referenzwert ansteigt, wird der gesteuerte Schalter des Gleichrichters (5, 18), der die Bremsleistung überträgt, derart gesteuert, dass das relative Leitintervall (23) des Schalters mit Anwachsen der Zwischenkreisspannung (21) ansteigt.

12. Einrichtung oder Verfahren gemäß einem der obigen Ansprüche, **dadurch gekennzeichnet, dass** der besagte Elektromotor (2) ein Aufzugsmotor ist.

## Revendications

1. Agencement de commande d'un moteur électrique (2) utilisé avec un convertisseur de fréquence (1), dans lequel le convertisseur de fréquence est monté entre la source d'énergie (3) et le moteur électrique (2), et dans lequel le convertisseur de fréquence comprend un redresseur de réseau (4) qui diminue et augmente également éventuellement la tension, un redresseur (5, 18) qui transmet la puissance de freinage du moteur et un onduleur (6) comprenant des commutateurs commandés (7), ainsi qu'un circuit intermédiaire (8, 9), qui est monté entre le redresseur de réseau (4), le redresseur qui transmet la puissance de freinage du moteur et l'onduleur, et lequel agencement de commande comprend une détermination de la vitesse (13) du moteur, dans lequel le redresseur (5, 18) qui transmet la puissance de freinage du moteur comprend une commande (11) de la puissance de freinage, laquelle commande de la puissance de freinage est prévue pour réguler la tension du circuit intermédiaire en fionction d'une valeur de référence (12), laquelle valeur de référence précitée de la tension du circuit intermédiaire est formée au moins en partie sur la base de la vitesse déterminée (13) du moteur, **caractérisé en ce que** le convertisseur de fréquence comprend une commande de redresseur de réseau (14), laquelle commande de redresseur de réseau est prévue pour réguler la tension du circuit intermédiaire en fionction d'une valeur de référence (12), laquelle valeur de référence de la tension du circuit intermédiaire est formée au moins en partie sur la base de la vitesse (13) mesurée ou estimée du moteur, dans lequel la commande (11) de la puissance de freinage comprend une première valeur de référence de la tension du circuit intermédiaire, la commande du redresseur de réseau comprend une seconde valeur de référence de la tension du circuit intermédiaire, et **en ce que** la première valeur de référence de la tension du circuit intermédiaire est supérieure à la seconde valeur de référence de la tension du circuit intermédiaire.

2. Agencement de commande selon la revendication 1, **caractérisé en ce que** l'onduleur (6) est monté entre le circuit intermédiaire (8, 9) et le moteur électrique (2), le convertisseur de fréquence (1) comprend une détermination de la direction du flux de puissance à travers l'onduleur, et **en ce que** le convertisseur de fréquence est monté pour commander la tension du circuit intermédiaire avec la commande du redresseur de réseau (14) lorsque le flux de puissance passe du circuit intermédiaire (8, 9) au moteur électrique (2) ainsi qu'avec la commande (11) de la puissance de freinage lorsque le flux de puissance passe du moteur électrique (2) au circuit intermédiaire (8, 9).

3. Agencement de commande selon l'une quelconque des revendications précédentes, **caractérisé en ce que** le convertisseur de fréquence (1) comprend des déterminations de la puissance dissipée du redresseur de réseau (4), du redresseur (5, 18) qui transmet la puissance de freinage du moteur et de l'onduleur (6), et **en ce que** le convertisseur de fréquence est prévu pour commander la tension du circuit intermédiaire soit avec une commande du redresseur de réseau (14), soit sinon avec une commande (11) de la puissance de freinage, et **en ce que** chaque commande utilisée est prévue pour réguler la tension du circuit intermédiaire en fionction d'une valeur de référence (12), laquelle valeur de référence de la tension du circuit intermédiaire est formée au moins en partie sur la base d'une comparaison de la puissance dissipée du redresseur de réseau (4), du redresseur (5, 18) qui transmet la puissance de freinage du moteur et également de l'onduleur (6).

4. Agencement de commande selon l'une quelconque des revendications précédentes, **caractérisé en ce que** le convertisseur de fréquence (1) comprend une commande (15) de l'onduleur pour commander le moteur avec une tension de sortie à fréquence variable et à amplitude variable, laquelle tension de sortie est formée en commutant les commutateurs (7) de l'onduleur au moyen d'une modulation de largeur d'impulsion avec la référence de commutation (25) formée.

5. Agencement de commande selon l'une quelconque des revendications précédentes, **caractérisé en ce que** le redresseur de réseau qui diminue la tension comprend un pont redresseur contrôlé (16).

6. Agencement de commande selon l'une quelconque des revendications précédentes, **caractérisé en ce que** le redresseur de réseau qui augmente et diminue la tension comprend un redresseur d'onduleur de réseau, lequel redresseur d'onduleur de réseau comprend un pont redresseur (19) ainsi qu'un filtre de réseau (20) connecté en série entre une source d'alimentation (3) et l'entrée du pont redresseur, et lequel redresseur de réseau qui augmente et diminue la tension comprend un hacheur (17) qui diminue la tension, monté sur la sortie de tension continue du pont redresseur (19).

7. Agencement de commande selon la revendication 6, **caractérisé en ce que** le redresseur (18) qui transmet la puissance de freinage du moteur comprend une diode montée en parallèle avec le commutateur commandé du hacheur précité (17) qui diminue la tension, ainsi qu'un commutateur commandé connecté en parallèle avec la diode du hacheur qui diminue la tension.

8. Agencement de commande selon les revendications 1 à 6, **caractérisé en ce que** le redresseur qui transmet la puissance de freinage du moteur comprend un commutateur commandé (5) monté en série avec la résistance de puissance (19), et **en ce que** le circuit série précité du commutateur et de la résistance de puissance est connecté en parallèle avec le circuit intermédiaire (8, 9) du convertisseur de fréquence.

9. Agencement de commande selon l'une quelconque des revendications précédentes, **caractérisé en ce que** le convertisseur de fréquence (1) comprend une mesure (21) de la tension du circuit intermédiaire, et **en ce que** la commande (11) de la puissance de freinage est prévue pour lire la tension du circuit intermédiaire mesurée et pour comparer la valeur de référence (12) de la tension du circuit intermédiaire à la tension du circuit intermédiaire mesurée (21), et lorsque la tension du circuit intermédiaire mesurée dépasse la valeur de référence, pour commander le commutateur commandable du redresseur (5, 18) qui transmet la puissance de freinage de sorte que l'intervalle conducteur relatifs (23) du commutateur augmente à mesure que la tension du circuit intermédiaire (23) augmente.

10. Procédé pour commander un moteur électrique utilisé avec un convertisseur de fréquence (1), dans lequel le convertisseur de fréquence est monté entre la source d'énergie (3) et le moteur électrique (2), et dans lequel le convertisseur de fréquence comprend un redresseur de réseau (4) qui diminue et augmente également éventuellement la tension, un redresseur (5, 18) qui transmet la puissance de freinage du moteur et un onduleur (6), ainsi qu'un circuit intermédiaire (8, 9), qui est entre le réseau, le redresseur qui transmet la puissance de freinage du moteur et l'onduleur, et dans lequel procédé, la vitesse (13) du moteur est déterminée, **caractérisé en ce que** le convertisseur de fréquence comprend une commande de redresseur de réseau (14), laquelle commande de redresseur de réseau est prévue pour réguler la tension du circuit intermédiaire en fionction d'une valeur de référence (12), laquelle valeur de référence précitée de la tension du circuit intermédiaire est formée au moins en partie sur la base de la vitesse (13) mesurée ou estimée du moteur, et **en ce que** :
une commande (11) de puissance de freinage est réalisée pour le redresseur (5, 18) qui transmet la puissance de freinage du moteur la valeur de référence (12) de la tension du circuit intermédiaire est formée au moins en partie sur la base de la vitesse déterminée (13) du moteur (2), dans lequel la commande (11) de la puissance de freinage comprenant une première valeur de référence de la tension du circuit intermédiaire, le redresseur de réseau comprend une seconde valeur de référence de la tension du circuit intermédiaire, et **en ce que** la première valeur de référence de la tension du circuit intermédiaire est supérieure à la seconde valeur de référence de la tension du circuit intermédiaire. la tension du circuit intermédiaire (21) est régulée avec la commande (11) de la puissance de freinage en fionction de la valeur de référence précitée (12) de la tension du circuit intermédiaire.

11. Procédé selon la revendication 10, **caractérisé en ce que** :
la tension du circuit intermédiaire (21) est mesurée,
la tension mesurée est comparée à la valeur de référence (12) de la tension du circuit intermédiaire,
lorsque la valeur mesurée de la tension du circuit intermédiaire dépasse la valeur de référence, le commutateur commandé du redresseur (5, 18) qui transmet la puissance de freinage est commandé de telle sorte que l'intervalle conducteur relatif (23) du commutateur augmente à mesure que la tension du circuit intermédiaire (21) augmente.

12. Agencement ou procédé selon l'une quelconque des revendications précédentes, **caractérisé en ce que** le moteur électrique (2) auquel il est fait référence est un moteur d'ascenseur.
